# EUROPEAN PATENT APPLICATION

(11) **EP 4 053 305 A1**
(43) Date of publication of application: **07.09.2022**
(21) Application number: 21893121.0
(22) Date of filing: 27.12.2021
(51) Int. Cl.: C23F 1/08, C23F 1/30, E21B 12/04, E21B 10/46, F16J 15/02

(54) **SEALED COBALT REMOVAL TOOLING, METHOD, REAGENT, AND POLYCRYSTALLINE DIAMOND COMPACT**

(30) Priority: 22.01.2021 CN 202110086761
(71) Applicant: Sichuan Jiarui Technology Co., Ltd., Chengdu City, Sichuan 611930 (CN)
(72) Inventor: ZHENG, Yu, Chongqing 400000 (CN); LIU, Nian, Suzhou, Jiangsu 215000 (CN); CAO, Lijuan, Langfang City, Hebei 065200 (CN); LI, Weiming, Xianning City, Hubei 437324 (CN)
(74) Representative: Ipside
(86) International application number: PCT/CN2021/141655
(87) International publication number: WO 2022/156487

(57) **Abstract**

The present application discloses a sealed cobalt removal tooling, method and reagent, and a polycrystalline diamond compact. The tooling comprises a sealing sleeve, a clamping mechanism, and a pressing mechanism. The sealing sleeve is configured to be sleeved over an outer wall of a workpiece; the clamping mechanism is sleeved over an outer wall of the sealing sleeve; the clamping mechanism is configured to provide a first pressure to the sealing sleeve; the pressing mechanism is arranged on the top of the sealing sleeve and is configured to provide a second pressure to the sealing sleeve; and an inner cavity for containing a chemical reagent is formed inside the pressing mechanism, and the top of the workpiece can extend into the inner cavity. The present application has the advantages that the overall service life of the tooling can be prolonged, a reaction speed of the chemical reagent can be increased, a cobalt removal depth can reach 1200 µm or above, and the requirements for ultra-deep cobalt removal of the workpiece can be met.

## Description

### Technical Field

The present application relates to the technical field of cobalt removal, and in particular to a sealed cobalt removal tooling, method and reagent, and a polycrystalline diamond compact.

### Background Art

As a key working component for crude oil and natural gas extraction, and as a material having functions of directly shearing and pulverizing rock structures, a polycrystalline diamond composite material plays a decisive role in drilling efficiency of the overall drill bit. Due to the extreme nature of subsurface drilling conditions, a polycrystalline diamond composite layer is required to have the best material properties to achieve mining tasks, including extremely high hardness, toughness, and thermal stability. The carbon atom arrangement structure of diamond itself provides the ultra-high hardness property of the polycrystalline diamond composite layer; and a microscopic grain boundary interface of polycrystalline bonding and a network structure of a metal catalyst existing between micron-scale grains provide the necessary toughness property of the polycrystalline diamond composite layer. With the continuous improvement of drilling technologies and equipment level, a rotation speed of a drill bit and a pressure at a tip of the drill bit continue to increase. As a result, unprecedented requirements have been put forward on the thermal stability of a diamond composite layer that is in direct contact with a rock surface and operates under working conditions of high pressure and high rotation speed. In a high-temperature and high-pressure synthesis process of the polycrystalline diamond composite material, transition metals of group VIII are usually used as catalysts to reduce the temperature and pressure required for the formation of crystal phases of diamond, so as to achieve engineering technical index level that can be achieved by existing presses, thereby completing the entire synthetic preparation process. However, in actual drilling applications, the transition metal elements infiltrated in the polycrystalline diamond material may cause local stress concentration due to the difference in thermal expansion coefficient between the transition metal elements and a diamond body and due to the phase change catalytic properties of the transition metal itself. Under a normal pressure, when the temperature reaches 700 degrees Celsius, a diamond phase will be catalytically converted into a graphite phase more stable under the normal pressure, seriously reducing the thermal stability of the diamond composite material.

With the continuous improvement in drilling technologies and performance requirements indicated above, the industry-wide demand for the hardness, toughness and thermal stability of the diamond composite layer has also increased significantly. While workpiece manufacturers promote the hardness and toughness of the composite layer by improving process conditions of the high-temperature and high-pressure synthesis process, the micro-structure of the composite layer and the overall arrangement density of the micro-grains are also greatly improved, so that a catalytic metal phase remaining in the diamond composite layer during the high-temperature and high-pressure synthesis process leaves finer pore spaces, making it more difficult for them to be contacted by chemical reagents that are configured to remove the metal phase. As a result, the required thermal stability is more difficult than ever to achieve. A significant increase in the time required for this critical processing places enormous pressure on the production cycle time for workpiece manufacturers and drill bit manufacturers to prepare end products. During sealed cobalt removal by the existing workpiece cobalt removal apparatus, due to the problem of relatively short service life of the cobalt removal apparatus, and the short reaction time of a chemical reagent and a layer subjected to cobalt removal of the compact, it is difficult for the cobalt removal depth of the surface of the layer subjected to cobalt removal of the compact to reach 1000 µm or above, so that the current market demand for ultra-deep cobalt removal of diamond to prolong the service life of diamond cannot be met.

### Summary of the Invention

A primary objective of the present application is to provide a sealed cobalt removal tooling, method and reagent, and a polycrystalline diamond compact, aiming to solve the technical problem of a cobalt removal depth of the surface of a layer subjected to cobalt removal of the compact not meeting the requirements due to the relatively short service life of the existing workpiece cobalt removal apparatus.

In order to achieve the above objective, the present application provides a sealed cobalt removal tooling, comprising a sealing sleeve, a clamping mechanism, and a pressing mechanism, wherein the sealing sleeve is configured to be sleeved over an outer wall of a workpiece; the clamping mechanism is sleeved over an outer wall of the sealing sleeve; the clamping mechanism is configured to provide a first pressure to the sealing sleeve; the pressing mechanism is arranged on the top of the sealing sleeve and is configured to provide a second pressure to the sealing sleeve; and an inner cavity for containing a chemical reagent is formed inside the pressing mechanism, and the top of the workpiece can extend into the inner cavity.

Optionally, the clamping mechanism comprises at least two groups of clamping blocks that are detachably connected to each other, inner walls of the clamping blocks are provided with clamping grooves, and the sealing sleeve and the workpiece are both located between the clamping grooves.

Optionally, the sealing sleeve comprises a sleeve tube for receiving the workpiece, the top of the sleeve tube is provided with an outwardly-extending first boss, each clamping groove comprises a first arc-shaped groove that is in contact with an outer wall of the sleeve tube, and a first stepped groove matching the first boss is arranged at the top of the first arc-shaped groove.

Optionally, the bottom of the sealing sleeve is closed or has an opening.

Optionally, the sealing sleeve is annular and has an outer diameter decreasing from top to bottom, the clamping groove comprises a second arc-shaped groove that is in contact with the outer wall of the workpiece, and an inverted conical frustum-shaped stepped groove matching the sealing sleeve is arranged at the top of the second arc-shaped groove.

Optionally, the pressing mechanism comprises a bearing block, the inner cavity is formed inside the bearing block, and the top of the bearing block is provided with a sealing gasket for sealing the inner cavity.

Optionally, the bottom of the bearing block is provided with a second boss that extends into the clamping groove, and the second boss is located on the top of the sealing sleeve.

Optionally, the sealed cobalt removal tooling further comprises an enclosing mechanism, wherein the sealing sleeve, the clamping mechanism, and the pressing mechanism are all located in the enclosing mechanism.

Optionally, the enclosing mechanism comprises a base, a receiving cavity is formed in the base, the sealing sleeve and the clamping mechanism are both located in the receiving cavity, an outer wall of the base is sleeved into a hollow pressing block, the pressing mechanism is located inside both the base and the pressing block, an outer wall of the pressing block is sleeved into an enclosing cover, and the enclosing cover is pressed against the top of the pressing mechanism.

Optionally, the pressing block comprises an internally threaded sleeve, the internal thread sleeve is in threaded connection with the base, the top of the internally threaded sleeve is connected to an inwardly-extending pressing boss, an outer wall of the pressing mechanism is provided with a second stepped groove matching the pressing boss, the top of the pressing boss is connected to an externally threaded sleeve, and the externally threaded sleeve is in threaded connection with the enclosing cover.

Optionally, a top face of the workpiece protrudes from a top face of the sealing sleeve by a protrusion height of H, where H = 600-800 µm.

Optionally, the sealing sleeve and the sealing gasket are made of an organic material and/or an inorganic material, wherein
the organic material includes one or more of engineering plastics, rubber, fluoroplastics or resins; and
the inorganic material includes one or more of metals, metal oxides or nitrides, non-metals, or non-metal oxides or nitrides.

Optionally, an inner wall of the inner cavity is provided with a corrosion-resistant layer, which is made of a material comprising one or more of fluoroplastics, resins, metals, metal oxides or nitrides, non-metals, or non-metal oxides or nitrides.

Optionally, materials used for the sealing sleeve, the sealing gasket and the bearing block have Young's moduli greater than 2.3 GPa;
preferably, the Young's moduli of the materials used are greater than 50 GPa; and
preferably, the Young's moduli of the materials used are greater than 200 GPa.

Optionally, a thermal expansion coefficient of the material of the sealing sleeve and the sealing gasket is greater than three times, preferably five times, the maximum one of thermal expansion coefficients of materials of the base, the bearing block and the enclosing cover.

Optionally, physical properties of a material used for the bearing block are: a flexural strength ≥ 200 Mpa, an elastic modulus ≥ 250 Gpa, a Poisson's ratio of 0.2-0.25, and a porosity ≤ 0.2%.

Optionally, materials used for the sealing sleeve, the sealing gasket and the bearing block have theoretical densities greater than 90%; and preferably, the theoretical densities of the materials used are greater than 95%.

A cobalt removal method using the sealed cobalt removal tooling includes the following steps:
installing a workpiece to be subjected to cobalt removal into the sealed cobalt removal tooling;
heating the sealed cobalt removal tooling at a heating temperature of 50°C to 350°C;
taking out the sealed cobalt removal tooling after heating, and cooling the sealed cobalt removal tooling to a room temperature;
disassembling the sealed cobalt removal tooling, and pouring out the chemical reagent from the inner cavity;
continuing to disassemble the sealed cobalt removal tooling, and taking out the workpiece subjected to cobalt removal; and
measuring a cobalt removal depth of the workpiece subjected to cobalt removal.

Optionally, the step of heating the sealed cobalt removal tooling at a heating temperature of 50°C to 350°C is performed using one or more of water bath, oil bath, gas bath, microwave heating, resistance wire heating, oven heating, electromagnetic induction heating, or infrared heating.

Optionally, the step of installing a workpiece to be subjected to cobalt removal into the sealed cobalt removal tooling comprises:
placing the workpiece into the base;
sleeving the sealing sleeve over the workpiece;
clamping the sealing sleeve by the clamping mechanism;
assembling the pressing mechanism to the top of the sealing sleeve;
then screwing a thread of the pressing block onto the outer wall of the base until the pressing boss abuts against the second stepped groove;
adding a chemical reagent into the inner cavity; and
screwing a thread of the enclosing cover onto an outer wall of the externally threaded sleeve until the enclosing cover abuts against the top of the pressing mechanism.

Optionally, in the step of adding a chemical reagent into the inner cavity, the added amount of the chemical reagent is 1/5 to 4/5 of the volume of the inner cavity.

Optionally, after the step of disassembling the sealed cobalt removal tooling, and pouring out the chemical reagent from the inner cavity, the method further comprises the following step:
repeatedly cleaning residual chemical reagent in the inner cavity with clean water.

Optionally, before the step of continuing to disassemble the sealed cobalt removal tooling, and taking out the workpiece subjected to cobalt removal, the method further comprises the following steps:
performing ultrasonic cleaning on the workpiece subjected to cobalt removal; and
then drying the workpiece cleaned.

A cobalt removal reagent for the cobalt removal method comprises, in parts by mass, 24-48 parts of hydrofluoric acid, 24-30 parts of nitric acid, and 32-40 parts of distilled water.

Optionally, the cobalt removal reagent comprises, in parts by mass, 36 parts of hydrofluoric acid, 27.2 parts of nitric acid, and 36.8 parts of distilled water.

A polycrystalline diamond compact prepared by the cobalt removal method comprises a substrate, a layer not subjected to cobalt removal, and a layer subjected to cobalt removal connected to one another in sequence from bottom to top, wherein the layer subjected to cobalt removal has a surface removal depth of h₁ and an edge removal depth of h₂, where h₁ ≥ 1200 µm, and h₂ ≤ 2h₁.

Optionally, a boundary face between the layer not subjected to cobalt removal and the layer subjected to cobalt removal has an inclination angle of a, where a < 45°.

Optionally, the cross section of each of the substrate, the layer not subjected to cobalt removal and the layer subjected to cobalt removal is in the shape of any one of a circle, a sector, a regular polygon, and an irregular polygon.

The present application can achieve the following beneficial effects.

In the present application, the first pressure (i.e., a lateral pressure) can be provided to the sealing sleeve under the clamping action of the clamping mechanism while the second pressure (i.e., a vertical pressure) can be applied to the sealing sleeve by the pressing mechanism, thereby ensuring a sealing effect between the sealing sleeve and the workpiece. After the whole tooling is heated, the thermal expansion coefficient of the sealing sleeve is much greater than that of an adjacent component, and under the combined action of the clamping mechanism and the pressing mechanism, the sealing sleeve is less likely to be damaged, thereby ensuring a sealing effect of the inner cavity under pressure conditions. After the chemical reagent is heated to exceed a boiling point under a normal pressure, a temperature rise can increase the reaction rate of cobalt removal, and the pressure of the inner cavity increases with the temperature rise, thereby further increasing the reaction rate. Moreover, under the double action of pressure and the guarantee of the sealing effect, a downward reaction depth of the chemical reagent is further increased. Accordingly, the first pressure and the second pressure are applied to the sealing sleeve at the same time to prolong its service life, thereby ensuring the sealing effect and increasing the reaction time of the chemical reagent. After testing, the cobalt removal depth of the workpiece prepared using the present application can reach 1200 µm or above, meeting the requirements for an ultra-deep removal process to the workpiece such as diamond.

### Brief Description of the Drawings

In order to describe the specific implementations of the present application or the technical solutions in the prior art more clearly, a brief introduction to the accompanying drawings required for describing the specific implementations or the prior art will be provided below. Similar elements or parts are generally identified by similar reference signs throughout the accompanying drawings. In the drawings, each element or part is not necessarily drawn to actual scale.
Fig. 1 is a schematic diagram of a structure of a sealed cobalt removal tooling in an embodiment of the present application;
Fig. 2 is a schematic diagram of another structure of a sealed cobalt removal tooling in an embodiment of the present application;
Fig. 3 is a schematic exploded view of a structure of a sealed cobalt removal tooling in an embodiment of the present application;
Fig. 4 is a schematic diagram of an assembly structure of a workpiece and a sealing sleeve in an embodiment of the present application;
Fig. 5 is a schematic structural diagram of a sealing sleeve with the bottom partially opened in an embodiment of the present application;
Fig. 6 is a schematic structural diagram of a sealing sleeve with the bottom partially opened in an embodiment of the present application;
Fig. 7 is a schematic structural diagram of a sealing sleeve with the bottom fully opened in an embodiment of the present application;
Fig. 8 is a schematic diagram, as seen from above, of another structural form of a sealing sleeve in an embodiment of the present application;
Fig. 9 is a schematic structural diagram of an annular sealing sleeve in an embodiment of the present application;
Fig. 10 is a perspective schematic structural diagram of a sealing sleeve in an embodiment of the present application;
Fig. 11 is a schematic structural diagram of a clamping mechanism in an embodiment of the present application;
Fig. 12 is a schematic structural diagram, as seen from above, of Fig. 11;
Fig. 13 is a schematic diagram of another structure of a clamping mechanism in an embodiment of the present application;
Fig. 14 is a schematic structural diagram of a pressing mechanism in an embodiment of the present application;
Fig. 15 is a schematic flowchart of a cobalt removal method in an embodiment of the present application;
Fig. 16 is a graph of time versus cobalt removal depth of a sealed cobalt removal tooling under a heating condition of 70°C in an embodiment of the present application;
Fig. 17 is a graph of time versus cobalt removal depth of a sealed cobalt removal tooling under a heating condition of 120°C in an embodiment of the present application;
Fig. 18 is a graph of time versus cobalt removal depth of a sealed cobalt removal tooling under a heating condition of 170°C in an embodiment of the present application;
Fig. 19 is a graph of time versus cobalt removal depth of a sealed cobalt removal tooling under a heating condition of 200°C in an embodiment of the present application; and
Fig. 20 is a cobalt removal effect diagram of a polycrystalline diamond compact in an embodiment of the present application.

### Reference signs:

100 - sealing sleeve, 110 - sleeve tube, 120 - first boss, 200 - clamping mechanism, 210 - clamping block, 211 - clamping groove, 2111 - first arc-shaped groove, 2112 - first stepped groove, 2113 - second arc-shaped groove, 2114 - inverted conical frustum-shaped stepped groove, 300 - pressing mechanism, 310 - bearing block, 311 - inner cavity, 312 - second stepped groove, 320 - sealing gasket, 330 - second boss, 400 - enclosing mechanism, 410 - base, 411 - receiving cavity, 420 - pressing block, 421 - internally threaded sleeve, 422 - pressing boss, 423 - externally threaded sleeve, 430 - enclosing cover, 500 - workpiece, 510 - substrate, 520 - layer not subjected to cobalt removal, and 530 - layer subjected to cobalt removal.

The implementations, functional characteristics and advantages of the objective of the present application will be further described with reference to the accompanying drawings in conjunction with the embodiments.

### Detailed Description of Embodiments

The technical solutions in the embodiments of the present application will be clearly and completely described below with reference to the accompanying drawings of the embodiments of the present application. Apparently, the embodiments described are merely some rather than all of the embodiments of the present application. On the basis of the embodiments of the present application, all other embodiments obtained by a person of ordinary skill in the art without involving any inventive effort shall fall within the scope of protection of the present application.

It should be noted that all directional indications (such as up, down, left, right, front, back ...) in the embodiments of the present application are only configured to explain the relative positional relationship and movement between components in a certain posture, and when the specific posture changes, the directional indications also change accordingly.

In the present application, unless otherwise explicitly specified and defined, terms "connection", "fixing" and the like should be understood in a broad sense, for example, "fixing" may be a fixed connection, a detachable connection, or n integral whole, may be a mechanical connection or an electrical connection; and may be a direct connection or an indirect connection through an intermediate medium, and may be communication between interiors of two elements or interaction between two elements, unless it may be clearly defined otherwise. For those of ordinary skill in the art, the specific meanings of the above terms in the present application can be understood according to specific situations.

In addition, if there are descriptions involving "first", "second", etc. in the embodiments of the present application, the terms "first" and "second" are for descriptive purposes only, and cannot be understood as indicating or implying the relative importance or implicitly indicating the number of indicated technical features. Therefore, the features defined with "first" and "second" may explicitly or implicitly include at least one of the features. In addition, the meaning of "and/or" herein includes three parallel solutions. Taking "A and/or B" as an example, it includes solution A, solution B, or a solution satisfying both of A and B. In addition, the technical solutions between the various embodiments may be combined with each other, but should be based on what may be implemented by those of ordinary skill in the art. When a combination of technical solutions is contradictory or cannot be implemented, it should be considered that the combination of technical solutions does not exist, and is not within the scope of protection of the present application.

### Embodiment 1

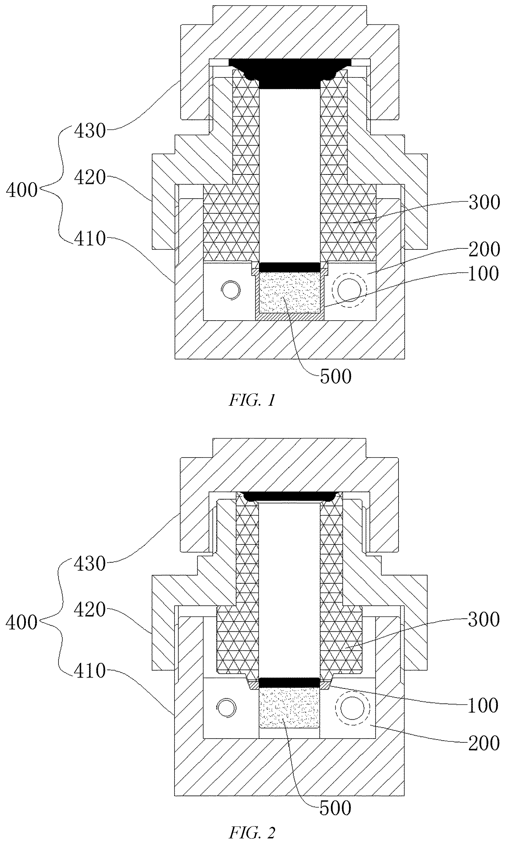

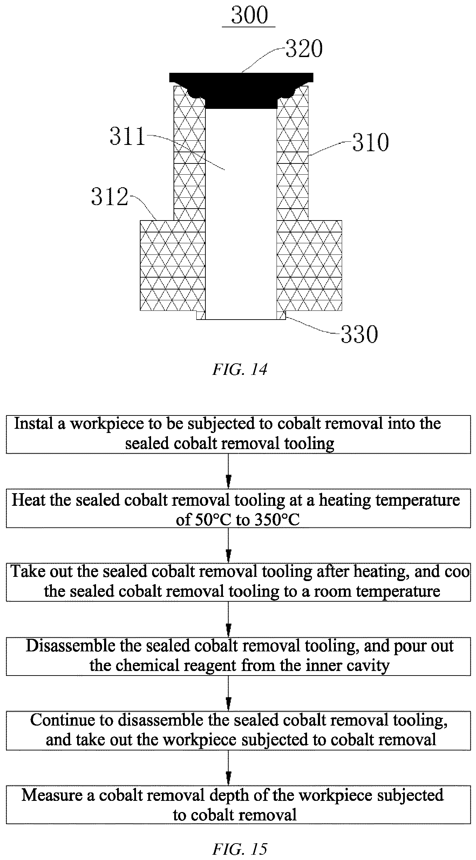

Referring to Figs. 1 to 14, this embodiment provides a sealed cobalt removal tooling, comprising a sealing sleeve 100, a clamping mechanism 200, and a pressing mechanism 300. The sealing sleeve 100 is configured to be sleeved over an outer wall of a workpiece 500; the clamping mechanism 200 is sleeved over an outer wall of the sealing sleeve 100; the clamping mechanism 200 is configured to provide a first pressure to the sealing sleeve 100; the pressing mechanism 300 is arranged on the top of the sealing sleeve 100; the pressing mechanism 300 is configured to provide a second pressure to the sealing sleeve 100; an inner cavity 311 for containing a chemical reagent is formed inside the pressing mechanism 300, and the top of the workpiece 500 can extend into the inner cavity 311.

The core of increasing the reaction time of the chemical reagent in a cobalt removal process is to ensure the sealing performance of a cobalt removal apparatus. In the prior art, only a sealing ring is used for sealing a cobalt removal position of the workpiece. However, due to the problem of the service life of the sealing ring or a channel formed during the chemical reaction being blocked by the generated salt, it is difficult for a cobalt removal depth of the surface of a workpiece to reach 1000 µm or above. Therefore, in this embodiment, a first pressure (i.e., a lateral pressure) can be provided to the sealing sleeve 100 under the clamping action of the clamping mechanism 200 while a second pressure (i.e., a vertical pressure) can be applied to the sealing sleeve 100 by the pressing mechanism 300, thereby ensuring a sealing effect between the sealing sleeve 100 and the workpiece 500. After the whole tooling is heated, the thermal expansion coefficient of the sealing sleeve 100 is much greater than that of an adjacent component, and under the combined action of the clamping mechanism 200 and the pressing mechanism 300, the sealing sleeve 100 is less likely to be damaged, thereby ensuring a sealing effect of the inner cavity 311 under pressure conditions. After the chemical reagent is heated to exceed a boiling point under a normal pressure, a temperature rise can increase the reaction rate of cobalt removal, and the pressure of the inner cavity 311 increases with the temperature rise, thereby further increasing the reaction rate. Moreover, under the double action of pressure and the guarantee of the sealing effect, a downward reaction depth is further increased. Accordingly, the first pressure and the second pressure are applied to the sealing sleeve 100 at the same time to prolong its service life, thereby ensuring the sealing effect and increasing the reaction time of the chemical reagent. After testing, the cobalt removal depth of the workpiece 500 prepared using the present application can reach 1200 µm or above, meeting the requirements for an ultra-deep removal process to the workpiece 500 such as diamond.

As an optional implementation, the clamping mechanism 200 includes at least two groups of clamping blocks 210 that are detachably connected to each other, inner walls of the clamping blocks 210 are provided with clamping grooves 211, and the sealing sleeve 100 and the workpiece 500 are both located between the clamping grooves 211.

In this implementation, generally, two clamping blocks 210 are provided. The two clamping blocks 210 are connected together by means of a bolt, that is, a detachable connection can be realized, while a close fit between the sealing sleeve 100 and the workpiece 500 can be ensured, playing a key role in protecting hard alloy of the workpiece 500. Moreover, a clamping force is also adjustable (i.e., a radial pressure is adjustable), different radial pressures can meet different cobalt removal processes, the pressure of the inner cavity 311 in the cobalt removal process can be greatly increased without causing corrosion of the alloy of the workpiece 500. It is suitable for clamping workpieces 500 with different outer diameters, and an adjustable function and a wide application range are achieved while operation is facilitated.

As an optional implementation, the sealing sleeve 100 includes a sleeve tube 110 for receiving the workpiece 500, the top of the sleeve tube 110 is provided with an outwardly-extending first boss 120, each clamping block 211 includes a first arc-shaped groove 2111 that is in contact with an outer wall of the sleeve tube 110, and a first stepped groove 2112 matching the first boss 120 is arranged at the top of the first arc-shaped groove 2111.

In this implementation, since the workpiece 500 is generally cylindrical, the sealing sleeve 100 may be in the shape of a round sleeve tube with a top opening, facilitating the direct placement of the workpiece 500 into the sealing sleeve 100. Moreover, positioning and assembling of the sealing sleeve 100 are facilitated through the matching between the first boss 120 and the first arc-shaped groove 2111. Here, the sealing sleeve 100 plays a role in sealing and protecting an interface of the hard alloy of the workpiece 500 and the whole hard alloy part.

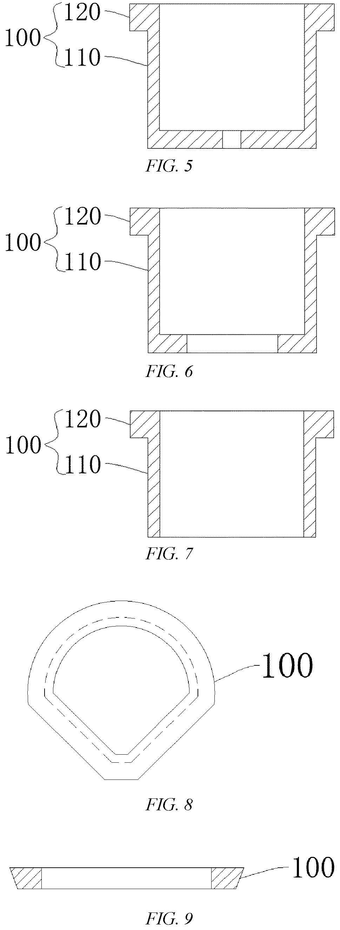

It should be noted that the workpiece 500 may also be of a structure having a sector-shaped, polygonal or other specially-shaped cross section, as long as the sealing sleeve 100 correspondingly match the workpiece 500 in shape. For example, for the workpiece 500 with a sector-shaped cross section, the sealing sleeve 100 correspondingly has a sector-shaped cross section, and its inner cavity is also sector-shaped (as shown in Fig. 8 ). The rest of the tooling does not need to be changed. It is only necessary to provide the sealing sleeve 100 in the shape corresponding to the shape of the workpiece 500. Therefore, universality is achieved to a certain extent. Therefore, the clamping mechanism 200 is used alone to provide the lateral pressure to the sealing sleeve 100, which also has a key function of clamping the sealing sleeve 100 in different shapes, providing a prerequisite for the tooling to have the function of preparing the workpieces 500 in various shapes.

As an optional implementation, the bottom of the sealing sleeve 100 is closed or has an opening. When the bottom of the sealing sleeve 100 has an opening, it may be a partial opening (as shown in Fig. 5 or 6 ) or a full opening (as shown in Fig. 7).

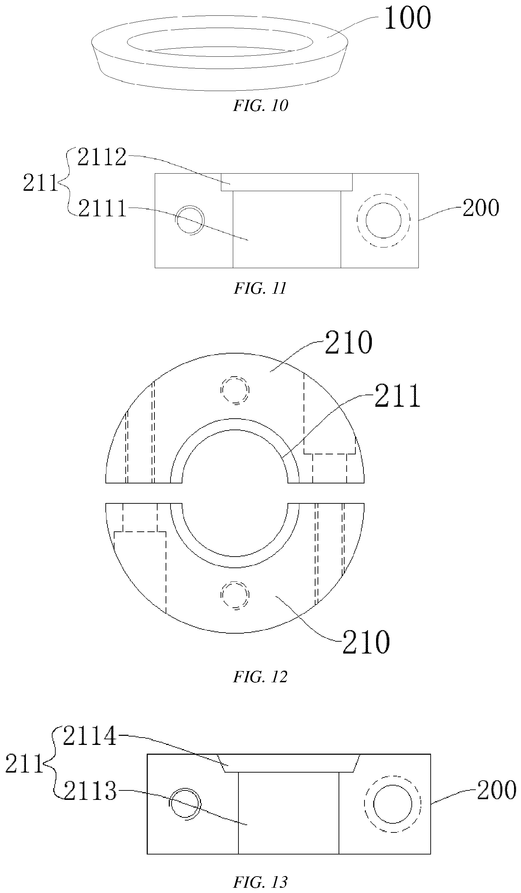

As another optional implementation, the sealing sleeve 100 is annular (as shown in Figs. 9 and 10), the sealing sleeve 100 has an outer diameter decreasing from top to bottom, the clamping groove 211 includes a second arc-shaped groove 2113 that is in contact with the outer wall of the workpiece 500, and an inverted conical frustum-shaped stepped groove 2114 matching the sealing sleeve 100 is arranged at the top of the second arc-shaped groove 2113.

In this implementation, the sealing sleeve 100 is annular, which is simpler in structure and cost saving, and can play a role in sealing the workpiece 500. During assembling, the sealing sleeve 100 is directly placed in the inverted conical frustum-shaped stepped groove 2114, facilitating assembly. Moreover, a radial pressing can be achieved when a conical frustum-shaped structure, wide at the top and narrow at the bottom, of the sealing sleeve 100 is pressed down. At this time, the clamping blocks 210 simultaneously clamp the sealing sleeve 100 and the workpiece 500 through the clamping grooves 211, achieving more stable and firmer clamping.

It should be noted that it is necessary for the annular sealing sleeve 100 to be sleeved to a position to be subjected to cobalt removal of the workpiece 500 (a position, close to the top, of the workpiece 500).

As an optional implementation, the pressing mechanism 300 includes a bearing block 310, the inner cavity 311 is formed inside the bearing block 310, and the top of the bearing block 310 is provided with a sealing gasket 320 for sealing the inner cavity 311. The bottom of the bearing block 310 is provided with a second boss 330 that extends into the clamping groove 211, and the second boss 330 is located on the top of the sealing sleeve 100.

In this implementation, a main function of the bearing block 310 is to form a pressure on the sealing sleeve 100, and the further pressing and protecting of the workpiece 500 are achieved through the second boss 330 matching the sealing ring in terms of a radial size. Moreover, a corner depth during cobalt removal is accurately controlled. After the assembly and connection are completed, the inner cavity 311 as a container carrying space is formed, which is configured to contain a chemical reagent solvent for the thermal stabilization of the surface of a composite layer.

It should be noted that when the sealing sleeve 100 is in the shape of a round sleeve tube 110, the second boss 330 is in an annular shape matching the first stepped groove 2112. When the sealing sleeve 100 is annular, the second boss 330 has an outer diameter decreasing from top to bottom to match the inverted conical frustum-shaped stepped groove 2114.

As an optional implementation, the sealed cobalt removal tooling further comprises an enclosing mechanism 400. The sealing sleeve 100, the clamping mechanism 200, and the pressing mechanism 300 are all located in the enclosing mechanism 400. The enclosing mechanism 400 includes a base 410, a receiving cavity 411 is formed in the base 410, the sealing sleeve 100 and the clamping mechanism 200 are both located in the receiving cavity 411, an outer wall of the base 410 is sleeved into a hollow pressing block 420, the pressing mechanism 300 is located inside both the base 410 and the pressing block 420, an outer wall of the pressing block 420 is sleeved into an enclosing cover 430, and the enclosing cover 430 is pressed against the top of the pressing mechanism 300.

In this implementation, the base 410 is configured to hold the whole workpiece 500 and the clamping mechanism 200. The pressing block 420 can provide a second pressure to the pressing mechanism 300, the pressing mechanism 300 then transmits the second pressure to the sealing sleeve 100, and finally, the pressing mechanism 300 is pressed by the enclosing cover 430, so as to complete the assembly of the whole tooling. The overall sealing structure is firm and reliable and has good sealing performance.

As an optional implementation, the pressing block 420 includes an internally threaded sleeve 421, the internally threaded sleeve 421 is in threaded connection with the base 410, the top of the internally threaded sleeve 421 is connected to an inwardly-extending pressing boss 422, an outer wall of the pressing mechanism 300 is provided with a second stepped groove 312 matching the pressing boss 422, the top of the pressing boss 422 is connected to an externally threaded sleeve 423, and the externally threaded sleeve 423 is in threaded connection with the enclosing cover 430.

In this implementation, the pressing block 420 is in threaded connection with the base 410 via the internally threaded sleeve 421, and is in threaded connection with the enclosing cover 430 via the externally threaded sleeve 423. An outer wall of the base 410 is provided with an external thread matching the internally threaded sleeve 421, and an inner wall of the enclosing cover 430 is provided with an internal thread matching the externally threaded sleeve 423. When the pressing block 420 is screwed in, self-locking is achieved through a threaded connection. When the pressing boss 422 is screwed into the second stepped groove 312, it can be ensured that the pressing boss 422 can axially press the bearing block 310 of the pressing mechanism 300, and the second pressure can be adjusted according to a screw-in depth of the pressing block 420, so as to meet the requirements for different cobalt removal processes, achieving a wide range of applications.

As an optional implementation, a top face of the workpiece 500 protrudes from a top face of the sealing sleeve 100 by a protrusion height of H, where H = 600-800 µm.The protrusion height of the workpiece 500 is a portion to be subjected to cobalt removal. A boundary face has an inclination angle a related to the protrusion height H. With the protrusion height H, the requirement can be met that the boundary face between the layer subjected to cobalt removal and the layer not subjected to cobalt removal of the workpiece 500 has an inclination angle a less than 45°.

As an optional implementation, the sealing sleeve 100 and the sealing gasket 320 are made of an organic material and/or inorganic material, wherein
the organic material includes one or more of engineering plastics, rubber, fluoroplastics or resins; and
the inorganic material includes one or more of metals, metal oxides or nitrides, non-metals, or non-metal oxides or nitrides.

In this embodiment, the sealing sleeve 100 and the sealing gasket 320 are important components to ensure the sealing performance, so there are special requirements for their materials, and good anti-corrosion performance is needed to meet the use requirements.

As an optional implementation, an inner wall of the inner cavity 311 is provided with a corrosion-resistant layer, which is made of a material including one or more of fluoroplastics, resin, metals, metal oxides or nitrides, non-metals, or non-metal oxides or nitrides, improving the corrosion resistance property of the inner cavity 311.

As an optional implementation, materials used for the sealing sleeve 100, the sealing gasket 320 and the bearing block 310 have Young's moduli greater than 2.3 GPa;
preferably, the Young's moduli of the materials used are greater than 50 GPa; and
preferably, the Young's moduli of the materials used are greater than 200 GPa.

In this implementation, the three modulus values of 2.3 GPa, 50 GPa, and 200 GPa correspond to strengths of engineering plastics, metal alloys, and metal oxide ceramics, respectively. Considering different material strength requirements and material costs, different materials can be selected as raw materials for manufacturing a chemical solution containing tooling.

As an optional implementation, a thermal expansion coefficient of a material of the sealing sleeve 100 and the sealing gasket 320 is greater than three times, preferably five times, the maximum one of thermal expansion coefficients of materials of the base 410, the bearing block 310 and the enclosing cover 430.

When heating the sealed cobalt removal tooling, in order to improve its sealing performance, a material with a large thermal expansion coefficient is selected for the sealing gasket 320 and the sealing sleeve 100. When an internal temperature of the inner cavity 311 rises and the pressure increases, the sealing gasket 320 and the sealing sleeve 100 also expand accordingly, and the sealing performance is improved.

As an optional implementation, physical properties of a material for the bearing block 310 are: a flexural strength ≥ 200 Mpa, an elastic modulus ≥ 250 Gpa, a Poisson's ratio of 0.2-0.25, and a porosity ≤ 0.2%.

As an optional implementation, materials used for the sealing sleeve 100, the sealing gasket 320 and the bearing block 310 have theoretical densities greater than 90%. Preferably, the theoretical densities of the materials used are greater than 95%.

### Embodiment 2

Referring to Figs. 1 to 15, this embodiment provides a cobalt removal method using the sealed cobalt removal tooling in Embodiment 1. The method includes the following steps:
installing a workpiece 500 to be subjected to cobalt removal into the sealed cobalt removal tooling;
heating the sealed cobalt removal tooling at a heating temperature of 50°C to 350°C;
taking out the sealed cobalt removal tooling after heating, and cooling the sealed cobalt removal tooling to a room temperature;
disassembling the sealed cobalt removal tooling, and pouring out the chemical reagent from the inner cavity 311;
continuing to disassemble the sealed cobalt removal tooling, and taking out the workpiece 500 subjected to cobalt removal; and
measuring a cobalt removal depth of the workpiece 500 subjected to cobalt removal.

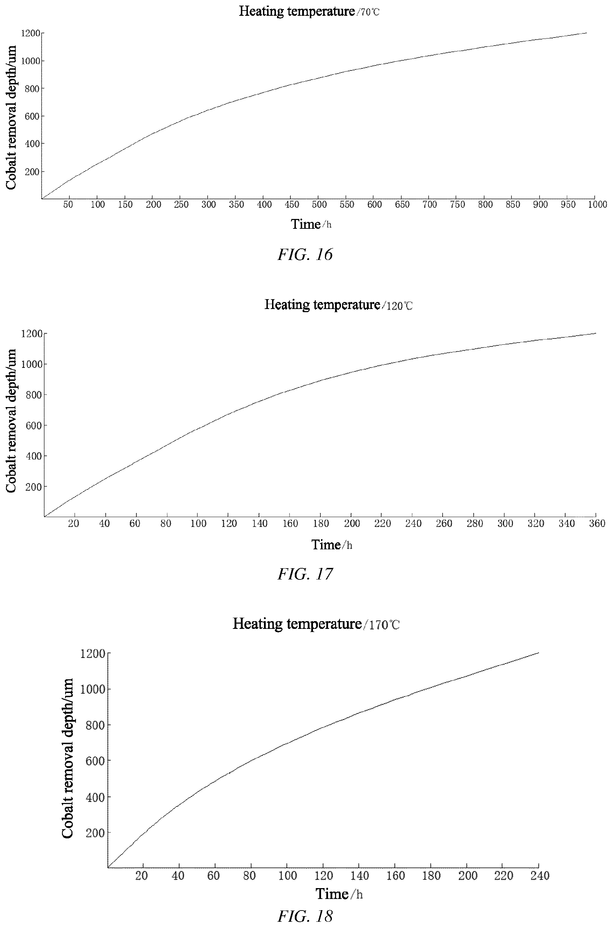

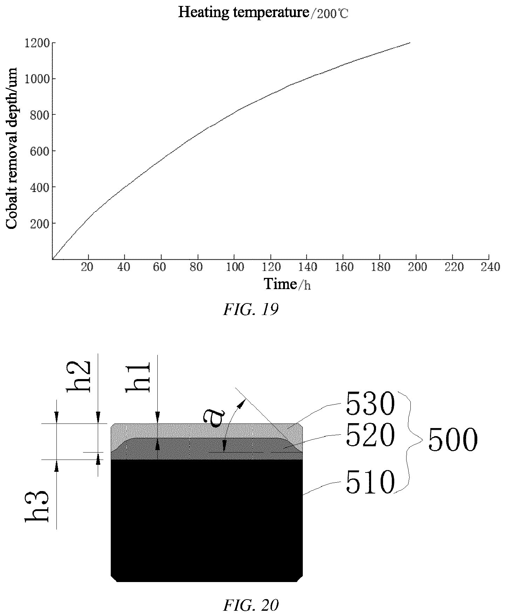

In this embodiment, when cobalt removal is carried out by the sealed cobalt removal tooling described in Embodiment 1, the prepared workpiece 500 can meet the processing requirements of ultra-deep cobalt removal. A cobalt removal depth test (taking the cobalt removal depth reaching 1200 µm as an example) is carried out under the heating temperature conditions of 70°C, 120°C, 170°C and 200°C respectively, and relationship graphs shown in Figs. 16 to 19 are drawn. It can be seen that the higher the heating temperature, the shorter the time required to reach the cobalt removal depth of 1200 µm.

It should be noted that data corresponding to the above relationship graphs only serve as a conceptual illustration for a single type of workpiece 500. Different workpieces 500 will have different cobalt removal speed responses, but the global concept is always applicable.

As an optional implementation, the step of heating the sealed cobalt removal tooling at a heating temperature of 50°C to 350°C is performed using one or more of water bath, oil bath, gas bath, microwave heating, resistance wire heating, oven heating, electromagnetic induction heating, or infrared heating.

As an optional implementation, the step of installing a workpiece 500 to be subjected to cobalt removal into the sealed cobalt removal tooling comprises:
placing the workpiece 500 into the base 410;
sleeving the sealing sleeve 100 over the workpiece 500;
clamping the sealing sleeve 100 by the clamping mechanism 200;
assembling the pressing mechanism 300 to the top of the sealing sleeve 100;
then screwing a thread of the pressing block 420 onto an outer wall of the base 410 until the pressing boss 422 abuts against the second stepped groove 312;
adding a chemical reagent into the inner cavity 311; and
screwing a thread of the enclosing cover 430 onto the outer wall of the externally threaded sleeve 423 until the enclosing cover 430 abuts against the top of the pressing mechanism 300.

As an optional implementation, in the step of adding a chemical reagent into the inner cavity 311, the added amount of the chemical reagent is 1/5 to 4/5 of the volume of the inner cavity 311. Since the cobalt removal chemical reagent contains volatile chemical components and water, during heating, the internal pressure of the inner cavity 311 is increased sharply due to gasification of liquid. When the usage amount of the chemical reagent exceeds 4/5 of the volume of the inner cavity 311, the remaining 1/5 of the space is not enough to receive the gasified chemical reagent, and the internal pressure will exceed a pressure that the tooling can bear, resulting in overflowing of the cobalt removal reagent or cracking of the sealed cobalt removal apparatus. When the amount of the chemical reagent is less than 1/5 of the volume of the inner cavity 311, the amount of the chemical reagent is not enough to reach the target cobalt removal depth, so that it is reasonable for the added amount of the chemical reagent to be 1/5 to 4/5 of the volume of the inner cavity 311.

As an optional implementation, after the step of disassembling the sealed cobalt removal tooling, and pouring out the chemical reagent from the inner cavity 311, the method further includes the following step:
repeatedly cleaning residual chemical reagent in the inner cavity 311 with clean water.

The inner cavity 311 is cleaned in a timely manner to reduce a corrosive effect of the chemical reagent, while preparing for the next use.

As an optional implementation, before the step of continuing to disassemble the sealed cobalt removal tooling, and taking out the workpiece 500 subjected to cobalt removal, the method further includes the following steps:
performing ultrasonic cleaning on the workpiece 500 subjected to cobalt removal; and
then drying the workpiece 500 cleaned.

In this implementation, ultrasonic cleaning can wash out the cobalt removal chemical reagent from a gap of the sealed cobalt removal tooling, so as to prevent the cobalt removal chemical reagent from contacting and corroding the metal alloy substrate of the workpiece 500 during demounting of the workpiece 500, and then the workpiece 500 is dried to completely volatilize the residual cobalt removal chemical reagent.

### Embodiment 3

This embodiment provides a cobalt removal reagent for the cobalt removal method in Embodiment 2, which comprises, in parts by mass, 24 parts of hydrofluoric acid, 24 parts of nitric acid, and 32 parts of distilled water.

### Embodiment 4

This embodiment provides a cobalt removal reagent for the cobalt removal method in Embodiment 2, which comprises, in parts by mass, 36 parts of hydrofluoric acid, 27.2 parts of nitric acid, and 36.8 parts of distilled water.

### Embodiment 5

This embodiment provides a cobalt removal reagent for the cobalt removal method in Embodiment 2, which comprises, in parts by mass, 48 parts of hydrofluoric acid, 30 parts of nitric acid, and 40 parts of distilled water.

### Embodiment 6

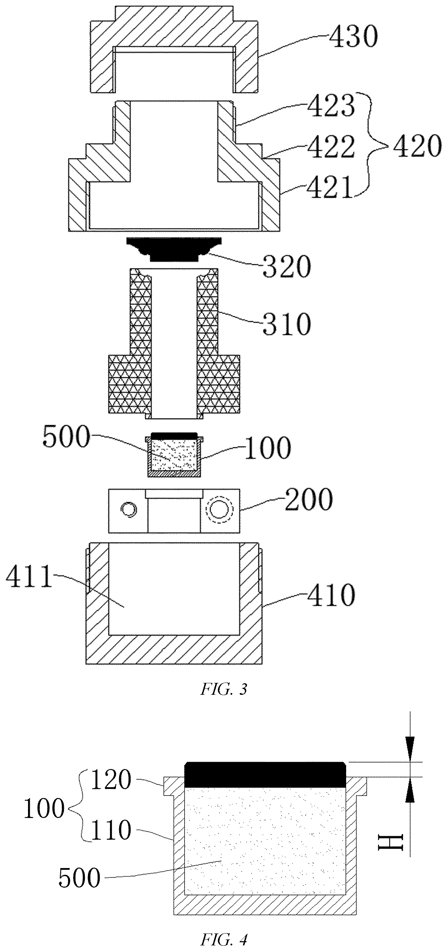

As shown in Figs. 4 to 10 and 20, this embodiment provides a polycrystalline diamond compact prepared by the cobalt removal method in Embodiment 2, which comprises a substrate 510, a layer not subjected to cobalt removal 520, and a layer subjected to cobalt removal 530 connected to one another in sequence from bottom to top. The layer subjected to cobalt removal 530 has a surface removal depth of h₁, where h₁ ≥ 1200 µm, and the layer subjected to cobalt removal 530 has an edge removal depth of h₂, where h₂ ≤ 2h_{1.}. A composite layer (i.e., a combination of the layer subjected to cobalt removal 530 and the layer not subjected to cobalt removal 520) has a thickness of h₃.

It should be noted that the surface removal depth and the edge removal depth of the polycrystalline diamond compact prepared are related to the protrusion height H during installation. For example, the protrusion height is H = 450-550 µm if it is necessary for the composite layer to have a thickness of h₃ = 2000 µm, for the surface removal depth to be h₁ = 1200 µm, and for the edge removal depth to be h₂ = 1500 µm.The protrusion height is H = 700-900 µm if it is necessary for the composite layer to have a thickness of h₃ = 3000 µm, for the surface removal depth to be h₁ = 1200 µm, and for the edge removal depth to be h₂ = 2400 µm. The protrusion height is H=1500-1800 µm if it is necessary for the composite layer to have a thickness of h₃ = 4000 µm, for the surface removal depth to be h₁ = 1500-2000 µm, and for the edge removal depth to be h₂ = 3000-3500 µm.

In addition, a boundary face between the layer not subjected to cobalt removal 520 and the layer subjected to cobalt removal 530 has an inclination angle of a, where a < 45°. Therefore, the polycrystalline diamond compact in this embodiment satisfies the requirements for the ultra-deep removal and the boundary face having an inclination angle a less than 45°, and is suitable for application scenarios with ultra-long service life.

As an optional implementation, the cross section of each of the substrate 510, the layer not subjected to cobalt removal 520 and the layer subjected to cobalt removal 530 is in the shape of any one of a circle, a sector, a regular polygon and an irregular polygon. For example, the substrate 510, the layer not subjected to cobalt removal 520 and the layer subjected to cobalt removal 530 are all of a structure having the same sector-shaped cross section or other cross sections. The substrate 510 may also have a circular cross section, and the layer not subjected to cobalt removal 520 and the layer subjected to cobalt removal 530 are of a structure having the sector-shaped cross section. Various specially-shaped polycrystalline diamond compacts are formed to meet the requirements of special applications.

It should be noted that during preparation of the polycrystalline diamond compacts in various shapes, only the sealing sleeve 100 in a corresponding shape needs to be used in the tooling, and the other parts of the tooling do not need to be changed, so that a high universality and a wide application range are achieved.

What are described above are only preferred embodiments of the present application and are not intended to limit the patent scope of the present application, and any equivalent structure or equivalent process alternation made by using the content of the specification and drawings of the present application, or an application of the content of the specification and drawings directly or indirectly to another related technical field, shall fall within the scope of protection of the present application.

## Claims

1. A sealed cobalt removal tooling, **characterized by** comprising:
a sealing sleeve configured to be sleeved over an outer wall of a workpiece;
a clamping mechanism sleeved over an outer wall of the sealing sleeve and configured to provide a first pressure to the sealing sleeve; and
a pressing mechanism arranged on the top of the sealing sleeve and configured to provide a second pressure to the sealing sleeve, wherein an inner cavity for containing a chemical reagent is formed inside the pressing mechanism, and the top of the workpiece is capable of extending into the inner cavity.

2. The sealed cobalt removal tooling of claim 1, **characterized in that** the clamping mechanism comprises at least two groups of clamping blocks that are detachably connected to each other, inner walls of the clamping blocks are provided with clamping grooves, and the sealing sleeve and the workpiece are both located between the clamping grooves.

3. The sealed cobalt removal tooling of claim 2, **characterized in that** the sealing sleeve comprises a sleeve tube for receiving the workpiece, the top of the sleeve tube is provided with an outwardly-extending first boss, each clamping groove comprises a first arc-shaped groove that is in contact with an outer wall of the sleeve tube, and a first stepped groove matching the first boss is arranged at the top of the first arc-shaped groove.

4. The sealed cobalt removal tooling of claim 3, **characterized in that** the bottom of the sealing sleeve is closed or has an opening.

5. The sealed cobalt removal tooling of claim 2, **characterized in that** the sealing sleeve is annular and has an outer diameter decreasing from top to bottom, the clamping groove comprises a second arc-shaped groove that is in contact with the outer wall of the workpiece, and an inverted conical frustum-shaped stepped groove matching the sealing sleeve is arranged at the top of the second arc-shaped groove.

6. The sealed cobalt removal tooling of claim 3 or 5, **characterized in that** the pressing mechanism comprises a bearing block, the inner cavity is formed inside the bearing block, and the top of the bearing block is provided with a sealing gasket for sealing the inner cavity.

7. The sealed cobalt removal tooling of claim 6, **characterized in that** the bottom of the bearing block is provided with a second boss that extends into the clamping groove, and the second boss is located on the top of the sealing sleeve.

8. The sealed cobalt removal tooling of claim 1, **characterized by** further comprising an enclosing mechanism, wherein the sealing sleeve, the clamping mechanism, and the pressing mechanism are all located in the enclosing mechanism.

9. The sealed cobalt removal tooling of claim 8, **characterized in that** the enclosing mechanism comprises a base, a receiving cavity is formed in the base, the sealing sleeve and the clamping mechanism are both located in the receiving cavity, an outer wall of the base is sleeved into a hollow pressing block, the pressing mechanism is located inside both the base and the pressing block, an outer wall of the pressing block is sleeved into an enclosing cover, and the enclosing cover is pressed against the top of the pressing mechanism.

10. The sealed cobalt removal tooling of claim 9, **characterized in that** the pressing block comprises an internally threaded sleeve, the internal thread sleeve is in threaded connection with the base, the top of the internally threaded sleeve is connected to an inwardly-extending pressing boss, an outer wall of the pressing mechanism is provided with a second stepped groove matching the pressing boss, the top of the pressing boss is connected to an externally threaded sleeve, and the externally threaded sleeve is in threaded connection with the enclosing cover.

11. The sealed cobalt removal tooling of claim 1, **characterized in that** a top face of the workpiece protrudes from a top face of the sealing sleeve by a protrusion height of H, where H = 600-800 µm.

12. The sealed cobalt removal tooling of claim 6, **characterized in that** the sealing sleeve and the sealing gasket are made of an organic material and/or an inorganic material, wherein
the organic material includes one or more of engineering plastics, rubber, fluoroplastics or resins; and
the inorganic material includes one or more of metals, metal oxides or nitrides, non-metals, or non-metal oxides or nitrides.

13. The sealed cobalt removal tooling of claim 12, **characterized in that** an inner wall of the inner cavity is provided with a corrosion-resistant layer, which is made of a material comprising one or more of fluoroplastics, resins, metals, metal oxides or nitrides, non-metals, or non-metal oxides or nitrides.

14. The sealed cobalt removal tooling of claim 13, **characterized in that** materials used for the sealing sleeve, the sealing gasket and the bearing block have Young's moduli greater than 2.3 GPa;
preferably, the Young's moduli of the materials used are greater than 50 GPa; and
preferably, the Young's moduli of the materials used are greater than 200 GPa.

15. The sealed cobalt removal tooling of claim 13, **characterized in that** a thermal expansion coefficient of the material of the sealing sleeve and the sealing gasket is greater than three times, preferably five times, the maximum one of thermal expansion coefficients of materials of the base, the bearing block and the enclosing cover.

16. The sealed cobalt removal tooling of claim 13, **characterized in that** physical properties of a material used for the bearing block are: a flexural strength ≥ 200 Mpa, an elastic modulus ≥ 250 Gpa, a Poisson's ratio of 0.2-0.25, and a porosity ≤ 0.2%.

17. The sealed cobalt removal tooling of claim 13, **characterized in that** materials used for the sealing sleeve, the sealing gasket and the bearing block have theoretical densities greater than 90%; and
preferably, the theoretical densities of the materials used are greater than 95%.

18. A cobalt removal method using the sealed cobalt removal tooling of claim 10, **characterized in that** the method comprises the following steps:
installing a workpiece to be subjected to cobalt removal into the sealed cobalt removal tooling;
heating the sealed cobalt removal tooling at a heating temperature of 50°C to 350°C;
taking out the sealed cobalt removal tooling after heating, and cooling the sealed cobalt removal tooling to a room temperature;
disassembling the sealed cobalt removal tooling, and pouring out the chemical reagent from the inner cavity;
continuing to disassemble the sealed cobalt removal tooling, and taking out the workpiece subjected to cobalt removal; and
measuring a cobalt removal depth of the workpiece subjected to cobalt removal.

19. The cobalt removal method of claim 18, **characterized in that** the step of heating the sealed cobalt removal tooling at a heating temperature of 50°C to 350°C is performed using one or more of water bath, oil bath, gas bath, microwave heating, resistance wire heating, oven heating, electromagnetic induction heating, or infrared heating.

20. The cobalt removal method of claim 18, **characterized in that** the step of installing a workpiece to be subjected to cobalt removal into the sealed cobalt removal tooling comprises:
placing the workpiece into the base;
sleeving the sealing sleeve over the workpiece;
clamping the sealing sleeve by the clamping mechanism;
assembling the pressing mechanism to the top of the sealing sleeve;
then screwing a thread of the pressing block onto the outer wall of the base until the pressing boss abuts against the second stepped groove;
adding a chemical reagent into the inner cavity; and
screwing a thread of the enclosing cover onto an outer wall of the externally threaded sleeve until the enclosing cover abuts against the top of the pressing mechanism.

21. The cobalt removal method of claim 20, **characterized in that** in the step of adding a chemical reagent into the inner cavity, the added amount of the chemical reagent is 1/5 to 4/5 of the volume of the inner cavity.

22. The cobalt removal method of claim 18, **characterized in that** after the step of disassembling the sealed cobalt removal tooling, and pouring out the chemical reagent from the inner cavity, the method further comprises the following step:
repeatedly cleaning residual chemical reagent in the inner cavity with clean water.

23. The cobalt removal method of claim 18, **characterized in that** before the step of continuing to disassemble the sealed cobalt removal tooling, and taking out the workpiece subjected to cobalt removal, the method further comprises the following steps:
performing ultrasonic cleaning on the workpiece subjected to cobalt removal; and
then drying the workpiece cleaned.

24. A cobalt removal reagent for the cobalt removal method of claim 18, **characterized by** comprising, in parts by mass, 24-48 parts of hydrofluoric acid, 24-30 parts of nitric acid, and 32-40 parts of distilled water.

25. The cobalt removal reagent of claim 24, **characterized by** comprising, in parts by mass, 36 parts of hydrofluoric acid, 27.2 parts of nitric acid, and 36.8 parts of distilled water.

26. A polycrystalline diamond compact prepared by the cobalt removal method of claim 18, **characterized by** comprising a substrate, a layer not subjected to cobalt removal, and a layer subjected to cobalt removal connected to one another in sequence from bottom to top, wherein the layer subjected to cobalt removal has a surface removal depth of h₁ and an edge removal depth of h₂, where h₁ ≥ 1200 µm, and h₂ ≤ 2h₁.

27. The polycrystalline diamond compact of claim 26, **characterized in that** a boundary face between the layer not subjected to cobalt removal and the layer subjected to cobalt removal has an inclination angle of a, where a < 45°.

28. The polycrystalline diamond compact of claim 27, **characterized in that** the cross section of each of the substrate, the layer not subjected to cobalt removal and the layer subjected to cobalt removal is in the shape of any one of a circle, a sector, a regular polygon, and an irregular polygon.
